# EUROPÄISCHE PATENTSCHRIFT

(11) **EP 0 798 153 B1**
(45) Veröffentlichungstag und Bekanntmachung des Hinweises auf die Patenterteilung: **16.10.2002**
(21) Anmeldenummer: 97102865.9
(22) Anmeldetag: 21.02.1997
(51) Int. Cl.: B60L 11/12, B60L 15/20, B60L 7/20

(54) **Verfahren zum Betreiben einer Antriebseinheit für Fahrzeuge und Antriebseinheit**
Method to drive a traction unit in a vehicle and traction unit
Procédé de commande de l'unité de propulsion d'un vehicule et unité de propulsion

(30) Priorität: 27.03.1996 DE 19612034
(43) Veröffentlichungstag der Anmeldung: 01.10.1997
(73) Patentinhaber: Voith Turbo GmbH & Co. KG, 89522 Heidenheim (DE)
(72) Erfinder: Dietzel, Bernd, 89428 Syrgenstein (DE)
(74) Vertreter: Dr. Weitzel & Partner

(56) Entgegenhaltungen:
- EP-A- 0 543 390
- FR-A- 2 057 383
- US-A- 5 457 363
- PATENT ABSTRACTS OF JAPAN vol. 010, no. 073 (M-463), 22.März 1986 & JP 60 216703 A (FUJI DENKI SEIZO KK), 30.Oktober 1985,
- PATENT ABSTRACTS OF JAPAN vol. 012, no. 201 (M-707), 10.Juni 1988 & JP 63 007110 A (YAMAHA MOTOR CO LTD), 13.Januar 1988,
- PATENT ABSTRACTS OF JAPAN vol. 003, no. 008 (M-046), 25.Januar 1979 & JP 53 133814 A (KAWASAKI HEAVY IND LTD), 22.November 1978,

## Beschreibung

Die Erfindung betrifft ein Verfahren zum Betreiben einer Antriebseinheit für Fahrzeuge, insbesondere für Nutzkraftwagen, im Einzelnen mit den Merkmalen aus dem Oberbegriff des Anspruchs 1; ferner eine Vorrichtung, insbesondere eine Antriebseinrichtung zur Durchführung des Verfahrens, im Einzelnen mit den Merkmalen des Oberbegriffes aus Anspruch 6.

Ausgangspunkt für die Betrachtung ist ein dieselelektrisches Antriebssystem, wie beispielsweise in den Druckschriften
1. DE 42 05 770 C2
2. DE 41 33 059 A1 und
3. EP-A 0 543 390
beschrieben. Derartige Antriebssysteme bzw. Antriebseinheiten für Fahrzeuge, insbesondere Nutzfahrzeuge, umfassen mindestens einen mit einem Antriebsrad verbundenen Elektromotor, welcher vorzugsweise als Transversalflußmaschine ausgeführt ist, und der jeweils von einer Wechselrichtereinheit mit elektrischer Leistung versorgt wird. Desweiteren ist ein Generator vorgesehen, welcher ebenfalls vorzugsweise als Transversalflußmaschine ausgeführt ist und der mechanisch mit einem Verbrennungsmotor, insbesondere mit einem Dieselmotor, koppelbar ist. Zur Erzeugung der elektrischen Leistung wird der Generator beispielsweise durch eine Vier-Quadranten-Wechselrichter angesteuert. Für die Vorgabe der Sollwerte an den Radmotoren (Drehmoment) sowie der Drehzahlsteuerung des Dieselmotors ist eine übergeordnete Fahrsteuerung vorgesehen, welche unter anderem in der Lage ist, den Fahrerwunsch auszuwerten.

Die Energieversorgung der mit den Antriebsrädern verbundenen Elektromotoren erfolgt bei derartigen dieselelektrischen Ausführungen beispielsweise über den Dieselmotor-Generatorsatz. Des weiteren ist für hybride Antriebssysteme eine Systemerweiterung durch das Vorsehen beispielsweise einer Batterie möglich.

Die Steuerung der abgegebenen Leistung bzw. des Drehmomentes an den Antriebsrädern sowie des Dieselmotors kann auf unterschiedliche Art und Weise realisiert werden.

Bei Fahrzeugen mit konventionellem Antriebsstrang, umfassend einen Verbrennungsmotor, ein mechanisches Getriebe mit verschiedenen Übersetzungsstufen, welches wenigstens mittelbar auf die Antriebsachse bzw. die Antriebsräder wirkt, wird der Fahrerwunsch nach einer erhöhten Geschwindigkeit oder Beschleunigung in der Regel durch ein Fahrpedal oder ein anderes Betätigungsorgan, welches direkt auf eine Stelleinheit am Verbrennungsmotor wirkt, realisiert. Die Stelleinheit am Verbrennungsmotor ist dabei das Leistungsstellglied, welches je nach Motorenart als Drosselklappe oder aber Einspritzeinrichtung ausgeführt sein kann. Eine Änderung an der Verstelleinheit hat zur Folge, daß der Fahrerwunsch zu einem entsprechenden Moment am Verbrennungsmotor, welches dann je nach der durch das Getriebe eingestellten Übersetzung auf die Antriebsachse bzw. die Antriebsräder wirkt, führt. Entsprechend den möglichen Geriebeübersetzungen spreizt bzw. verschiebt sich der Momentenstellbereich im Bezug auf das an den Antriebsrädern wirkende Moment. Das durch das Fahrpedal am Verbrennungsmotor eingestellte Moment bleibt bei gleicher Fahrpedalstellung immer annähernd gleich d. h. bei einem Wert zwischen ca. null und dem bei der jeweiligen Drehzahl vom Verbrennungsmotor abgebbaren Maximalmoment. Beim Anfahren, was in der Regel mit eingestellter kleinstmöglicher Getriebeübersetzung stattfindet und gegebenenfalls mit Unterstützung durch eine Reibungskupplung oder einen geeigneten Wandler erfolgt, ist es für den Fahrer eines solchen Fahrzeuges möglich, das an den Antriebsrädern abzugebende Wunschmoment derart zu dosieren, daß beim Anfahrvorgang an einer Steigung das Fahrzeug sanft und ruckfrei anfahren kann bzw. sogar durch Vorgabe eines entsprechenden Momentes im Stillstand gehalten werden kann. Bildet man beim dieselelektrischen Antriebssystem analog zum konventionellen Antrieb den Stellbereich des Fahrerwunschsensors auf das an den Antriebsrädern abzugebende Maximalmoment ab, so bekommt man eine wesentlich schlechtere Auflösung als dort, da die Spreizung des Momentenstellbereiches wegen fehlender Getriebeübersetzungen wegfällt.

Bei den in den Druckschriften 1 und 2 beschriebenen Ausführungen äußert der Fahrer mittels des Fahrpedals einen Leistungswunsch für die Antriebsleistung oder die vom Generator aufgenommene elektrische Leistung.

Ein gattungsgemäßes Verfahren ist aus der Druckschrift EP-A 0 543 390 bekannt. Bei diesem wird eine, den Fahrzustand wenigstens mittelbar charakterisierende Größe ermittelt, eine den Fahrerwunsch am Betätigungsorgan für die Bewegung des Fahrzeuges beschreibende Größe erfaßt und wenigstens bei Vorliegen einer, den Fahrerwunsch für die Bewegung des Fahrzeuges charakterisierenden Größe die aktuelle, den Fahrzustand wenigstens mittelbar beschreibende Größe erfaßt. Entsprechend des Fahrerwunsches wird ein Sollwert für ein an den Antriebsrädern abzugebendes Fahrmoment gebildet und eine Stellgröße für ein Stellglied zur Einstellung dieses Fahrmomentes am Elektromotor gebildet. Gleichzeitig wird der den Fahrerwunsch beschreibenden Größe ein Sollwert für eine an die Antriebsräder abzugebende Leistung zugeordnet und dementsprechend der Elektromotor und/oder die vom Generator aufgenommene Leistung eingesteuert. Zur Durchführung des Verfahrens ist der Antriebseinheit eine Steuereinheit, umfassend eine Steuereinrichtung, zugeordnet, wobei ein erster Eingang mit einem Betätigungsorgan für die Vorgabe eines Fahrerwunsches gekoppelt ist, während ein erster Ausgang wenigstens mittelbar mit einem Stellglied zur Beeinflussung der vom Generator aufgenommenen Leistung und/oder der von dem Elektromotor abgegebenen Leistung gekoppelt ist.

Der Nachteil dieser Lösungen besteht im Wesentlichen darin, daß im Stillstand des Fahrzeuges die elektrische Ist-Leistung gleich null ist und jede auch noch so kleine Leistungsvorgabe sofort zum Maximalmoment in den Antriebsmotoren und damit den Antriebsrädern führt. Dies macht ein vernünftiges Anfahren oder gar Halten im Stillstand an einer Steigung unmöglich oder erfordert einen zusätzlichen Anfahrregler.

Der Erfindung liegt deshalb die Aufgabe zugrunde, ein Verfahren zum Betreiben einer Antriebseinheit, umfassend eine Verbrennungskraftmaschine, einen Generator und wenigstens einen Elektromotor zum wenigstens mittelbaren Antrieb eines Rades, ferner eine Antriebseinheit derart weiterzuentwickeln, daß die genannten Nachteile bei dieselelektrischen Antriebskonzepten vermieden werden.

Die erfüllungsgemäße Lösung der Aufgabe ist durch die Merkmale der Ansprüche 1 und 6 gekennzeichnet. Vorteilhafte Ausgestaltungen sind in den Unteransprüchen wiedergegeben.

Erfindungsgemäß wird an einer Antriebseinheit, umfassend wenigstens eine Verbrennungsmaschine und einen Elektromotor - vorzugsweise in Form einer Transversalflußmaschine-, insbesondere einem dieselelektrischen Antriebssystem eine, den aktuellen Bewegungszustand des Fahrzeuges wenigstens mittelbar charakterisierende Größe fortlaufend ermittelt oder erfaßt. Die ermittelte Größe wird mit vorgebbaren Vergleichswerten für diese Größen, die den Stillstand charakterisieren und/oder bei niedrigen Geschwindigkeiten oder Fahrleistungen und/oder Verbrennungsmotordrehzahlen auftreten würden, verglichen. Bei Unterschreitung dieser vorgebbaren Vergleichswerte wird der aktuelle Fahrerwunsch, der sich beispielsweise in der Betätigung des Fahrpedals äußert, in ein bestimmtes Fahrmoment an den Antriebsmotoren interpretiert und dementsprechend eine Verstellung am Leistungsstellglied des Verbrennungsmotors herbeigeführt. Bei Überschreitung dieser vorgebbaren Vergleichswerte und/oder wenn die entsprechend der Interpretation des Fahrerwunsches als Moment aktuell von den Antriebsmotoren an den Rädern abgegebene Antriebsleistung oder die durch den Generator aufgenommene Leistung einen bestimmten Wert annähernd erreicht oder überschreitet, wird der Fahrerwunsch als Leistungssollwert für die an den Antriebsrädern abzugebende und/oder durch den Generator aufzunehmende Leistung interpretiert. In diesem Fall wirkt die Verstellung in Analogie wie bei konventionellen Antriebskozepten. Sinnvollerweise ist die sich in diesem Fall aus der Interpretation des Fahrerwunsches als Leistung ergebende Soll-Leistung etwa gleich der sich aus der Momenteninterpretation ergebenden Leistung und/oder der an den Antriebsrädern abgegebenen und/oder der durch den Generator aufgenommenen Leistung, damit es bei diesem Übergang nicht zu einer zu schnellen Momentenänderung am Abtrieb oder am Verbrennungsmotor kommen kann, was den Fahrkomfort beeinträchtigen würde.

Der Erfinder hat erkannt, daß eine Abbildung des Stellbereiches des Betätigungsorganes, insbesondere des mit diesem gekoppelten Fahrerwunsch-Sensors auf das von den Radmotoren maximal abgebbare Maximalmoment dazu führt, daß sich der effektiv nutzbare Sollwertbereich wegen der Beziehung Mₘₐₓ (n_{Antriebsmotor}) = Pₘₐₓ / n_{Antriebsmotor} ab der Drehzahl des Antriebmotors, ab welcher die maximale Motorleistung abgegeben werden kann, mit zunehmender Drehzahl des /der Antriebsmotoren verringert. Spätestens von da ab ist es demnach sinnvoll, den größten Teil des Stellbereiches des Fahrerwunsch-Sensors auf die maximale Antriebsleistung, oder was dem entspricht, auf das mit n_{Antriebsmotor} sich verringernde maximal abgebbare Moment Mₘₐₓ (n_{Antriebsmotor}) abzubilden, entsprechend der erfindungsgemäßen Vorgehensweise.

Der Stellbereich des Fahrerwunsch-Sensors umfaßt dabei vorzugsweise nicht nur den Momenten- und/oder Leistungs-Sollwertbereich von null bis zum jeweiligen Maximalwert, sondern beginnt bereits im negativen Bereich der jeweiligen Größe, womit er zusätzlich den Bereich des Schleppmomentes und/oder der Schleppleistung, mit welchem gegebenenfalls der Antriebsmotor in Abhängigkeit von der Fahrgeschwindigkeit bei nicht betätigtem Fahrerwunschsensor beaufschlagt ist, umfaßt. Das Schleppmoment dient dabei in aller Regel dazu, das leichte Verzögern, welches bei entlastetem Fahrpedal bei konventionellen Antriebssträngen vorhanden ist, nachzubilden.

Vorrichtungsmäßig ist der Antriebseinheit mit den Merkmalen des Oberbegriffes von Anspruch 6 dazu eine Steuereinheit zugeordnet. Diese umfaßt eine Steuereinrichtung, welche wenigstens zwei Eingänge - einen ersten Eingang für ein vom Betätigungsorgan ausgehendes Signal, welches eine den Fahrerwunsch nach Änderung des Bewegungszustandes charakterisierende Größe verdeutlicht und einen zweiten Eingang für ein Signal, für eine, den aktuellen Bewegungszustand des Fahrzeuges wenigstens mittelbar beschreibenden Größe - aufweist. Die den Bewegungszustand des Fahrzeuges mittelbar charakterisierende Größe wird vorzugsweise fortlaufend ermittelt und einer Vergleichseinrichtung in der Steuereinrichtung zugeführt.

Diese Vergleichseinrichtung enthält wenigstens einen vorgebbaren Vergleichswert für die, den Fahrzustand charakterisierende Größe. Dabei besteht sowohl die Möglichkeit die den aktuellen Fahrzustand charakterisierende Größe gleich in der gleichen Maßeinheit wie den Vergleichswert zu ermitteln oder die den aktuellen Fahrzustand charakterisierende Größe über entsprechende Umrechnung in eine mit dem Vergleichswert direkt vergleichbare Größe zu bringen. In diesem Fall ist zusätzlich ein Umrechnungseinheit der Vergleichseinrichtung zugeordnet. Ein Beispiel für diesen letztgenannten Fall wäre die Ermittlung der Drehzahl der Antriebsräder als die zur Beschreibung des aktuellen Fahrzustandes dienende Größe und die Vorgabe des Vergleichswertes als ein Geschwindigkeitswert bestimmter Größe.

Entsprechend des Vergleichsergebnisses -Über-oder Unterschreitung des Vergleichswertes- werden dem, dem Fahrerwunsch zur Änderung des Bewegungszustandes entsprechenden Signal, Sollwerte für die von der Transversalflußmaschine an die Antriebsräder abzugebende Leistung oder das abzugebende Moment in einer Zuordnungseinrichtung bestimmt. Die Zuordnung kann dabei über in der Steuereinrichtung hinterlegte Kennfelder oder durch Berechnung erfolgen. Bei Überschreitung des vorgegebenen Vergleichswertes wird der Fahrerwunsch als Leistungssollwert für die an den Antriebsrädern abzugebende und/oder durch den Generator aufzunehmende Leistung interpretiert. Dies bedeutet, daß in diesem Fall eine im Wesentlichen zum konventionellen Antriebskonzept analoge Verstellung des Leistungsstellgliedes am Verbrennungsmotor ergibt. Dazu wird der Fahrerwunsch, der sich beispielsweise in der Intensität der Betätigung des Fahrpedals, des Weges, welcher beim Herunterdrücken des Fahrpedals zurückgelegt wird, sowie andere, den Fahrerwunsch interpretierende Größen, welche beispielsweise über einen Sensor mit einem bestimmten Stellbereich abgebildet werden können, in eine Verstellung des Leistungstellgliedes umgewandelt. Der Stellbereich des Fahrerwunschsensors wird dabei für den Bereich der Überschreitung des vorgegebenen Vergleichswertes für die den Bewegungszustand des Fahrzeuges charakterisierenden Größen beim Stillstand und/oder einer geringen Geschwindigkeit auf das von den Antriebsmotoren an den Rädern maximale abgebbare Moment abgebildet. Bei Unterschreitung des vorgegebenen Vergleichswertes wird der Fahrerwunsch als Moment, welches von der Transversalflußmaschine an die Antriebsräder abzugeben ist, interpretiert.

Entsprechend den dem Fahrerwunsch zugeordneten Werten für das von der Transversalflußmaschine an die Antriebsräder abzugebende Moment oder die abzugebende Leistung wird eine Stellgröße gebildet, welche der Ansteuerung eines Stellgliedes zur Einstellung des abzugebenden Momentes an der Transversalflußmaschine oder der von der Transversalflußmaschine abzugebenden und/oder der vom Generator dazu erforderlichen aufzunehmenden Leistung dient, welche an den Ausgängen der Steuereinrichtung ausgegeben werden. Die Anzahl der zu diesem Zweck vorgesehenen Ausgänge richtet sich dabei nach der Anzahl der möglichen anzusteuernden Stellglieder. Die Ansteuerungsmöglichkeiten für den letztgenannten Fall sind hinlänglich aus dem Stand der Technik bekannt, insbesondere aus der unter (1) genannten Druckschrift.

Der aktuelle Fahrzustand kann beispielsweise durch die aktuelle Geschwindigkeit beschrieben werden. Diese ist beispielsweise aus der Drehzahl der Antriebsräder oder über die aktuelle Motordrehzahl unter Berücksichtigung der nachgeordneten Generator-Transversalflußmaschineneinheit ermittelbar. Zur Ermittlung dieser Größen sind entsprechend der vorgenannten Möglichkeiten entsprechende Sensoren an den Antriebsrädern oder der Motorausgangswelle vorgesehen.

Die Größe des Vergleichswertes ist Entscheidungskriterium für die Zuordnung zwischen dem vorgegebenen Fahrerwunsch für die Änderung des Bewegungszustandes und der dazu an die Antriebsräder vom Elektromotor, insbesondere der Transversalflußmaschine, abzugebenden Leistung oder dem abzugebenden Moment. Der Vergleichswert steht dabei für einen vorgebbaren Wert einer, den Fahrzustand wenigstens mittelbar beschreibenden Größe. Dieser Wert charakterisiert den Stillstand des Fahrzeuges und/oder eine niedrige Geschwindigkeit und/oder eine niedrige Fahrleistung und/oder Drehzahl der Verbrennungskraftmaschine.

Die Zuordnung kann mittels in der Steuereinrichtung abgelegter Kennfelder erfolgen, aus denen das dem Fahrerwunsch entsprechende Moment oder die dem Fahrerwunsch entsprechende Leistung ermittelt werden, und denen wiederum in Abhängigkeit der den Fahrzustand beschreibenden aktuellen Größe oder Größen wenigstens eine Stellgröße zur Ansteuerung wenigstens eines Stellgliedes, welches dem Elektromotor und/oder Generator und/oder Verbrennungsmotor zugeordnet sein kann, ermittelt wird. Eine weitere Möglichkeit besteht darin, die einander entsprechenden Werte rechnerisch zu ermitteln.

Die Vergleichswerte und die Zuordnungskennfelder können bereits vom Hersteller der Antriebseinheiten vorgegeben werden.

Erfindungswesentlich ist, daß der gesamte Stellbereich des Betätigungsorgans und damit des sogenannten Fahrerwunsch-Sensors, sowohl auf die vom Elektromotor an die Antriebsräder abzugebende Leistung als auch auf das vom Elektromotor an die Antriebsräder abzugebende Moment abgebildet wird. Die Wahl der Zuordnung zwischen Fahrerwunsch und zu erzielenden Moment oder zu erzielender Leistung erfolgt in Abhängigkeit des aktuellen Fahrzustandes bei Vorgabe des Fahrerwunsches.

Die Steuereinheit ist vorzugsweise Bestandteil einer der Antriebseinheit zugeordneten zentralen Steuer- und Regeleinrichtung, welche auch anderweitige Aufgaben zu erfüllen hat.

Die erfindungsgemäße Lösung ermöglicht es, Fahrzeugen mit einem dieselelektrischen Antriebssystem, insbesondere einem Verbrennungsmotor Generatorsatz, auch im Stillstand des Fahrzeuges sowie bei geringen Geschwindigkeiten ein vernünftiges Anfahren oder gar Halten im Stillstand und an einer Steigung zu ermöglichen ohne dem Erfordernis eines zusätzlichen Anfahrreglers.

Die erfindungsgemäße Lösung ist nachfolgend anhand zweier Figuren erläutert. Es zeigen:
- Fig. 1: eine schematische Darstellung eines Antriebssystems;
- Fig. 2: ein Flußdiagramm zur Verdeutlichung des erfindungsgemäßen Verfahrens.

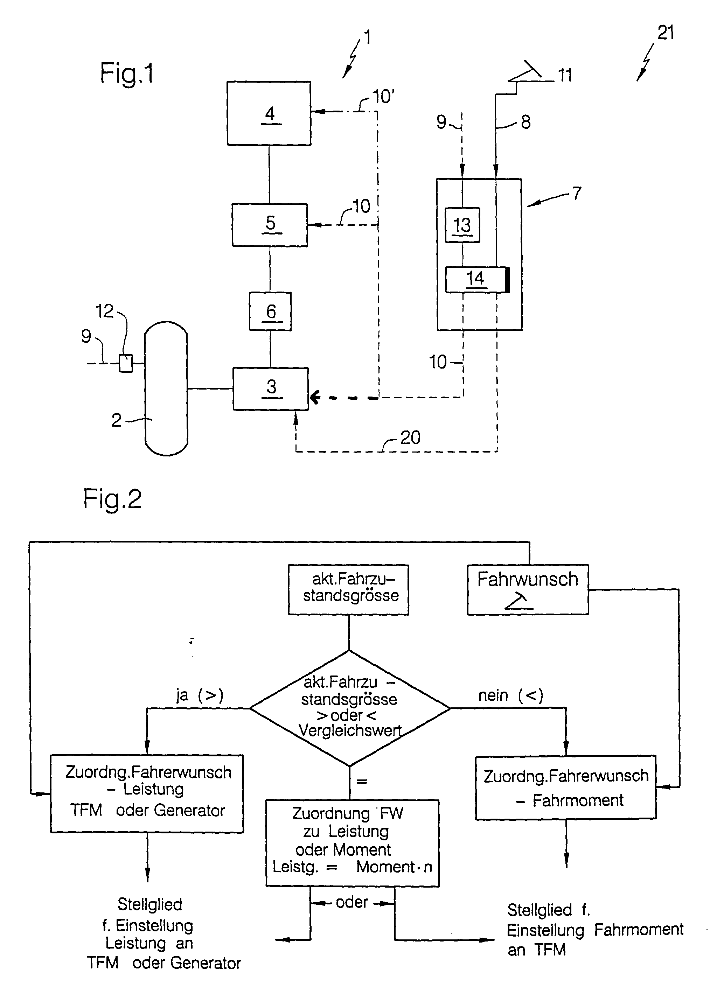

Figur 1 verdeutlicht schematisch eine erfindungsgemäß gestaltete Antriebseinheit 1. Diese umfaßt wenigstens einen, ein Antriebsrad 2 wenigstens mittelbar antreibenden Elektromotor in Form einer Transversalflußmaschine 3, eine Verbrennungskraftmaschine 4 und einen, mit der Verbrennungskraftmaschine 4 mechanisch koppelbaren Generator 5. Jede Transversalflußmaschine 3 ist elektrisch mit dem Generator 5 koppelbar, beispielsweise über einen Gleichspannungszwischenkreis 6. Der Generator 5 ist vorzugsweise ebenfalls als Transversalflußmaschine ausgeführt. Als Verbrennungskraftmaschine 4 werden in der Regel Dieselmotoren eingesetzt. Der Antriebseinheit 1 ist des weiteren eine Steuereinheit 21 zugeordnet. Diese umfaßt wenigstens ein Steuereinrichtung 7 mit wenigstens zwei Eingängeneinem ersten Eingang 8 und einem zweiten Eingang 9- und einem Ausgang 10 sowie einem weiteren Ausgang 20.

Der Antriebseinheit 1 ist wenigstens ein Betätigungsorgan 11 zur Vorgabe eines Fahrerwunsches für die Bewegung des Fahrzeuges vorgegeben. Als diese Betätigungsorgane fungieren beispielsweise das Gaspedal und das Bremspedal.

Der erste Eingang 8 der Steuereinrichtung 7 ist mit dem Betätigungsorgan 11 gekoppelt. Der zweite Eingang 9 der Steuereinrichtung ist mit einer Einrichtung 12 zur Erfassung einer den aktuellen Fahrzustand wenigstens mittelbar beschreibenden Größe gekoppelt. Die Einrichtung 12 kann als Sensor zur Erfassung der aktuellen Drehzahl der Antriebsräder 2 und damit einer die Fahrzeuggeschwindigkeit beschreibenden Größe ausgeführt sein.

Die Steuereinrichtung 7 umfaßt eine Vergleichseinrichtung 13. In dieser werden entweder direkt die den aktuellen Fahrzustand beschreibenden Größen mit einem Vergleichswert dieser Größe verglichen oder es wird die den Fahrzustand charakterisierende Größe in einen Wert für die Fahrzeuggeschwindigkeit, die Antriebsleistung und/oder Motordrehzahl umgewandelt und mit Vergleichswerten für diese Größen verglichen. Bei Unterschreitung wird der den Fahrerwunsch beschreibenden Größe in einer der Vergleichseinrichtung nachgeordneten Zuordnungseinrichtung 14 ein Sollwert für ein an den Antriebsrädern abgebbares Fahrmoment zugeordnet und dementsprechend über die Ausgabe einer dementsprechend gebildeten Stellgröße am Ausgang 20 wenigstens ein Stellglied zur Einstellung dieses Fahrmomentes am Elektromotor angesteuert.
Bei Überschreitung wird der den Fahrerwunsch beschreibenden und am ersten Eingang 8 anliegenden Größe in einer der Vergleichseinrichtung nachgeordneten Zuordnungseinrichtung 14 ein Sollwert für eine an den Antriebsrädern abzugebende Leistung zugeordnet und dementsprechend über die Ausgabe einer Stellgröße am Ausgang 10 wenigstens ein Stellglied zur Einstellung der Leistung an der Transversalflußmaschine 3 angesteuert.

Die Verbindung 10' verdeutlicht dabei die Möglichkeit der Leistungseinstellung über das Leistungsstellglied der Verbrennungkraftmaschine.

In der Figur 2 ist nochmals anhand eines Flußdiagrammes die Zuordnung zwischen Fahrerwunsch und der von der Transversalflußmaschine 3 an die Antriebsräder 2 abzugebenden Leistung bzw. dem abzugebenden Moment dargestellt.

## Patentansprüche

1. Verfahren zum Betreiben einer Antriebseinheit für ein Fahrzeug
- mit wenigstens einem, ein Antriebsrad (2) wenigstens mittelbar antreibenden Elektromotor (3);
- mit einer Verbrennungskraftmaschine (4);
- mit einem, mit der Verbrennungskraftmaschine (4) mechanisch koppelbaren Generator (5);
- jeder Elektromotor (3) ist elektrisch mit dem Generator (5) koppelbar;
- mit einem Betätigungsorgan (11) zur Vorgabe eines Fahrerwunsches für die Bewegung des Fahrzeuges;
1.1 bei welchem eine, den Fahrzustand wenigstens mittelbar charakterisierende Größe ermittelt wird;
1.2 bei welchem eine, den Fahrerwunsch am Betätigungsorgan für die Bewegung des Fahrzeuges beschreibende Größe erfaßt wird;
1.3 bei welchem wenigstens bei Vorliegen einer, den Fahrerwunsch für die Bewegung des Fahrzeuges charakterisierenden Größe die aktuelle, den Fahrzustand wenigstens mittelbar beschreibende Größe erfaßt wird;
1.4 bei welchem die den aktuellen Fahrzustand wenigstens mittelbar beschreibende Größe mit wenigstens einem fest vorgebbaren Vergleichswert verglichen wird und bei welchem
1.4.1 bei dessen Unterschreitung der den Fahrerwunsch beschreibenden Größe ein Sollwert für ein an den Antriebsrädern abzugebendes Fahrmoment zugeordnet wird und dementsprechend wenigstens eine Stellgröße für ein Stellglied zur Einstellung dieses Fahrmomentes am Elektromotor angesteuert wird;
1.4.2 bei dessen Überschreitung der den Fahrerwunsch beschreibenden Größe ein Sollwert für eine an die Antriebsräder abzugebende Leistung zugeordnet wird und dementsprechend wenigstens eine Stellgröße für ein Stellglied zur Einstellung dieser Leistung am Elektromotor und/oder der vom Generator aufgenommenen Leistung angesteuert wird;
1.5 bei welchem der Vergleichswert ein vorgebbarer Wert einer den Fahrzeugstillstand und/oder einer niedrigen Geschwindigkeit und/oder Fahrleistung und/oder Verbrennungsmotorendrehzahl beschreibenden Größe ist.

2. Verfahren nach Anspruch 1, **dadurch gekennzeichnet, daß** bei Gleichheit der den Fahrzustand wenigstens mittelbar beschreibenden Größe mit dem fest vorgebbaren Vergleichswert der den Fahrerwunsch beschreibenden Größe der zugeordnete Sollwert für die vom Elektromotor an die Antriebsräder abzugebende Leistung der Leistung entspricht, die sich bei Zuordnung der den Fahrerwunsch beschreibenden Größe zu dem vom Elektromotor an die Antriebsräder abzugebenden Fahrmoment ergibt.

3. Verfahren nach einem der Ansprüche 1 oder 2, **dadurch gekennzeichnet, daß** dem Stellbereich des Betätigungsorganes ein Momentenbereich von Null bis zum Maximalmoment und ein Leistungsbereich von Null bis zur maximal möglichen Leistung zur Auswahl zugeordnet ist.

4. Verfahren nach einem der Ansprüche 1 oder 2, **gekennzeichnet durch** die folgenden Merkmale:
4.1 dem Stellbereich des Betätigungsorganes ist ein Momentenbereich von kleiner Null bis zum Maximalmoment und ein Leistungsbereich von kleiner Null bis zur maximal möglichen Leistung zur Auswahl zugeordnet;
4.2 bei Freigabe des Betätigungsorganes erfolgt die Zuordnung in Abhängigkeit des aktuellen Fahrzustandes derart, daß der Bereich des Schleppmomentes nachbildbar ist.

5. Verfahren nach einem der Ansprüche 1 bis 3, **dadurch gekennzeichnet, daß** die den Fahrzustand charakterisierende Größe fortlaufend ermittelt wird.

6. Antriebseinheit für ein Fahrzeug
6.1 mit wenigstens einem, ein Antriebsrad (2) wenigstens mittelbar antreibenden Elektromotor (3);
6.2 mit einer Verbrennungskraftmaschine (4);
6.3 mit einem, mit der Verbrennungskraftmaschine (4) mechanisch koppelbaren Generator (5);
6.4 jeder Elektromotor (3) ist elektrisch mit dem Generator (5) koppelbar;
6.5 mit wenigstens einem Betätigungsorgan (11) zur Vorgabe eines Fahrerwunsches für die Bewegung des Fahrzeuges;
6.6 mit einer Steuereinheit (21), umfassend eine Steuereinrichtung (7), mit wenigstens einem ersten Eingang (8) und einem ersten Ausgang (10);
6.7 der erste Eingang (8) ist mit dem Betätigungsorgan (11) gekoppelt;
6.8 der erste Ausgang ist wenigstens mittelbar mit einem Stellglied zur Beeinflussung der vom Generator aufgenommenen Leistung und/oder der von dem Elektromotor abgebbaren Leistung gekoppelt;
6.9 die Steuereinrichtung (7) umfaßt einen zweiten Ausgang (20);
6.10 der zweite Ausgang (20) ist mit einem Stellglied zur Beeinflussung des vom Elektromotor abzugebenden Momentes gekoppelt;
6.11 mit wenigstens einer Erfassungseinrichtung (12) für eine den aktuellen Fahrzustand wenigstens mittelbar beschreibenden Größe;
6.12 die Steuereinrichtung (7) weist einen zweiten Eingang (9) auf, der mit der Erfassungseinrichtung (12) gekoppelt ist;
6.13 die Steuereinrichtung (7) umfaßt eine Vergleichseinrichtung (13) zum Vergleich der den aktuellen Fahrzustand charakterisierenden Größe mit einem vorgebbaren Vergleichswert;
6.14 die Steuereinrichtung (7) umfaßt eine, der Vergleichseinrichtung (13) nachgeordnete Zuordnungseinrichtung (14), welche Mittel umfaßt, die entsprechend dem am ersten Eingang (8) anliegenden Signal für den Fahrerwunsch
6.14.1 bei Unterschreitung des Vergleichswertes einen Sollwert für ein an den Antriebsrädern abzugebendes Fahrmoment ermitteln und dementsprechend wenigstens eine am zweiten Ausgang (20) ausgebbare Stellgröße zur Ansteuerung wenigstens eines Stellgliedes zur Einstellung dieses Fahrmomentes am Elektromotor bilden;
6.14.2 bei Überschreitung des Vergleichswertes einen Sollwert für eine an den Antriebsrädern abzugebende Leistung ermitteln und dementsprechend wenigstens eine am ersten Ausgang (10) ausgebbare Stellgröße zur Ansteuerung wenigstens eines Stellgliedes zur Einstellung der abzugebenden Leistung am Elektromotor und/oder der vom Generator aufzunehmenden Leistung bilden.

7. Antriebseinheit nach Anspruch 6, **dadurch gekennzeichnet, daß** der Elektromotor (3) als Transversalflußmaschine ausgeführt ist.

8. Antriebseinheit nach einem der Ansprüche 6 bis 7, **dadurch gekennzeichnet, daß** das Betätigungsorgan (11) ein Gaspedal und/oder Brempedal sind.

9. Antriebseinheit nach einem der Ansprüche 6 bis 8, **dadurch gekennzeichnet, daß** die Mittel in der Zuordnungseinrichtung (14) hinterlegbare Kennfelder sind.

10. Antriebseinheit nach einem der Ansprüche 6 bis 9, **dadurch gekennzeichnet, daß** die Mittel zu durchlaufende Berechnungsprogramme sind.

## Claims

1. Method for operating a drive unit for a vehicle
- with at least one electric motor (3) at least indirectly driving a driving wheel (2);
- with an internal-combustion engine (4);
- with a generator (5) which can be mechanically coupled to the internal-combustion engine (4);
- each electric motor (3) can be electrically coupled to the generator (5);
- with an actuating member (11) for inputting a driver's wish for the movement of the vehicle;
1.1 in which a variable at least indirectly characterising the driving state is determined;
1.2 in which a variable describing the driver's wish at the actuating member for the movement of the vehicle is detected;
1.3 in which the instantaneous variable at least indirectly describing the driving state is detected at least in the presence of a variable characterising the driver's wish for the movement of the vehicle;
1.4 in which the variable at least indirectly describing the instantaneous driving state is compared with a strictly predeterminable comparison value and in which
1.4.1 in the event of the latter not being attained a desired value for a driving moment to be delivered to the driving wheels is allocated to the variable describing the driver's wish and accordingly at least one correcting variable for a final control element for adjusting this driving moment at the electric motor is triggered;
1.4.2 in the event of the comparison value being exceeded a desired variable for power to be delivered to the driving wheels is allocated to the variable describing the driver's wish and accordingly at least one correcting variable for a final control element for adjusting this power at the electric motor and/or the power received by the generator is triggered;
1.5 in which the comparison value is a predeterminable value of a variable describing the vehicle stoppage and/or a low speed and/or driving performance and/or internal-combustion engine end speed.

2. Method according to claim 1, **characterised in that** in the event of the variable at least indirectly describing the driving state being identical to the strictly predeterminable comparison value of the variable describing the driver's wish the allocated desired value for the power to be delivered from the electric motor to the driving wheels corresponds to the power resulting from allocation of the variable describing the driver's wish to the driving moment to be delivered to the driving wheels by the electric motor.

3. Method according to either of claims 1 or 2, **characterised in that** a moment range from zero up to a maximum moment and a power range from zero up to the maximum possible power is allocated to the correcting range of the actuating member for the purpose of selection.

4. Method according to either of claims 1 or 2, **characterised by** the following features:
4.1 a moment range from less than zero up to a maximum moment and a power range from less than zero up to the maximum possible power is allocated to the correcting range of the actuating member for the purpose of selection;
4.2 when the actuating member is released the allocation is made as a function of the instantaneous driving state such that the range of the drag moment can be imitated.

5. Method according to any of claims 1 to 3, **characterised in that** the variable characterising the driving state is continuously ascertained.

6. Drive unit for a vehicle
6.1 with at least one electric motor (3) at least indirectly driving a driving wheel (2);
6.2 with an internal-combustion engine (4);
6.3 with a generator which can be mechanically coupled to the internal-combustion engine (4);
6.4 each electric motor (3) can be electrically coupled to the generator (5);
6.5 with at least one actuating member (11) for inputting a driver's wish for the movement of the vehicle;
6.6 with a control unit (21) comprising a control apparatus (7), with at least one first input (8) and a first output (10);
6.7 the first input (8) is coupled to the actuating member (11);
6.8 the first output is at least indirectly coupled to a final control element to influence the power received by the generator and/or the power which can be delivered by the electric motor;
6.9 the control apparatus (7) comprises a second output (20);
6.10 the second output (20) is coupled to a final control element to influence the moment to be delivered by the electric motor;
6.11 with at least one detector (12) for a variable at least indirectly describing the instantaneous driving state;
6.12 the control apparatus (7) has a second input (9) coupled to the detector (12) ;
6.13 the control apparatus (7) comprises a comparator (13) for comparing the variable characterising the instantaneous driving state with a predeterminable comparison value;
6.14 the control apparatus (7) comprises an allocation device (14) arranged downstream of the comparator (13) and comprising means which in accordance with the signal present at the first input (8) for the driver's wish
6.14.1 ascertain a desired value for a driving moment to be delivered to the driving wheels in the event of the comparison value not being attained and accordingly form at least one correcting variable which can be output at the second output (20) to trigger at least one final control element for adjusting this driving moment at the electric motor;
6.14.2 ascertain a desired variable for power to be delivered to the driving wheels in the event of the comparison value being exceeded and accordingly form at least one correcting variable which can be output at the first output (10) to trigger at least one final control element for adjusting the power to be delivered at the electric motor and/or the power to be received by the generator.

7. Drive unit according to claim 6, **characterised in that** the electric motor (3) is designed as a transverse flux motor.

8. Drive unit according to either of claims 6 or 7, **characterised in that** the actuating member (11) is an accelerator pedal and/or a brake pedal.

9. Drive unit according to any of claims 6 to 8, **characterised in that** the means are performance characteristics which can be stored in the allocation device (14).

10. Drive unit according to any of claims 6 to 9, **characterised in that** the means are calculation programmes to be run through.

## Revendications

1. Procédé de commande d'une unité de propulsion d'un véhicule
- avec au moins un moteur électrique (3) entraînant au moins indirectement une roue motrice (2)
- avec un moteur à combustion (4) ;
- avec une génératrice (5) adaptée à s'accoupler mécaniquement avec le moteur à combustion (4)
- chaque moteur électrique est adapté à s'accoupler sélectivement avec la génératrice (5)
- avec un organe actionneur (11) pour la notification d'un souhait du conducteur pour le mouvement du véhicule ;
1.1 où l'on élabore une grandeur caractérisant au moins indirectement l'état de marche ;
1.2 où l'on saisit une grandeur décrivant le souhait du conducteur sur l'organe actionneur pour le mouvement du véhicule ;
1.3 où au moins sur présentation d'une grandeur caractérisant le souhait du conducteur pour le mouvement du véhicule on saisit une grandeur décrivant au moins indirectement l'état de marche réel ;
1.4 où la grandeur décrivant au moins indirectement l'état de marche réel est comparée à une valeur de comparaison fixe prédéterminable ; et où
1.4.1 si l'on se trouve au dessous de la grandeur décrivant le souhait du conducteur on affecte une valeur de consigne pour un couple d'entraînement à fournir aux roues motrices et de manière correspondante on commande au moins une grandeur de réglage pour un organe de réglage pour l'établissement de ce couple d'entraînement sur le moteur électrique
1.4.2 en cas de dépassement de la grandeur décrivant le souhait du conducteur on affecte une valeur de consigne à la puissance à délivrer aux roues motrices et de manière correspondante au moins une grandeur de réglage pour un organe de réglage pour l'établissement de cette puissance sur le moteur électrique et/ou de la puissance prélevée sur la génératrice ;
1.5 où la valeur de comparaison est une valeur prédéterminable d'une grandeur décrivant l'état de repos et/ou une vitesse et/ou une puissance et/ou un nombre de tours du moteur à combustion de faible valeur.

2. Procédé selon la revendication 1 **caractérisé en ce qu'**en cas d'égalité de la grandeur décrivant au moins indirectement l'état de marche avec la valeur de comparaison fixe prédéterminable de la grandeur décrivant le souhait du conducteur, la valeur de consigne de la puissance à fournir par le moteur électrique aux roues motrices correspond à la puissance qui lors de l'affectation de la grandeur décrivant le souhait du conducteur détermine le couple d'entraînement à délivrer par le moteur électrique aux roues motrices.

3. Procédé selon la revendication 1 ou 2 **caractérisé en ce que** l'on affecte à la plage de réglage de l'organe actionneur une plage de couples allant de zéro au couple maximal et une plage de puissance allant de zéro à la puissance maximale possible, au choix.

4. Procédé selon la revendication 1 ou 2 **caractérisé par** les dispositions suivantes :
4.1 on affecte à la plage de l'organe actionneur une plage de couples allant de zéro au couple maximal et une plage de puissance allant de zéro à la puissance maximale possible au choix ;
4.2 en cas de libération de l'organe actionneur l'affectation s'effectue en fonction de l'état de marche réel de telle sorte que le domaine du moment de glissement est reconstituable.

5. Procédé selon l'une des revendications 1 à 3 **caractérisé en ce que** la grandeur caractérisant l'état de marche est élaborée de façon continue.

6. Unité d'entraînement pour un véhicule ;
6.1 avec au moins un moteur électrique (3) entraînant au moins indirectement une roue motrice (2)
6.2 avec un moteur à combustion (4)
6.3 avec une génératrice (5) adaptée à s'accoupler mécaniquement au moteur à combustion (4)
6.4 chaque moteur électrique (3) peut s'accoupler à la génératrice (5)
6.5 avec au moins un organe actionneur (11) pour la présentation d'un souhait du conducteur pour le mouvement du véhicule
6.6 avec une unité de commande (21) comportant un dispositif de commande (7) avec au moins une première entrée (8) et une première sortie (10)
6.7 la première entrée (8) est couplée à l'organe actionneur (11)
6.8 la première sortie (10) est couplée au moins indirectement avec l'organe de réglage pour influencer la puissance prélevée sur la génératrice et/ou la puissance pouvant être délivrée par le moteur électrique ;
6.9 le dispositif de commande (7) comporte une deuxième sortie (20) ;
6.10 la deuxième sortie (20) est couplée avec un organe de réglage pour influencer le couple à délivrer par le moteur électrique ;
6.11 avec au moins un dispositif de saisie (12) pour une grandeur décrivant au moins indirectement l'état de marche réel ;
6.12 le dispositif de commande (7) présente une deuxième entrée (9) qui est couplé avec le dispositif de saisie (12) ;
6.13 le dispositif de commande (7) comporte un dispositif comparateur (13) pour comparaison de la grandeur caractérisant l'état de marche réel à une valeur de comparaison prédéterminable ;
6.14 le dispositif de commande (7)comporte un dispositif d'affectation (14) subordonné au dispositif de comparaison (13), lequel comporte des moyens qui, selon le signal présent sur la première entrée (8) pour le souhait du conducteur ;
6.14.1 si l'on se trouve au dessous de la valeur de comparaison, élaborent une valeur de consigne pour le couple de marche à délivrer aux roues motrices et de manière correspondante forment une grandeur de réglage applicable à la deuxième sortie (20) pour la commande d'au moins un organe de réglage pour la détermination de ce couple de marche au moteur électrique ;
6.14.2 en cas de dépassement de la valeur de comparaison, élaborent une valeur de consigne pour une puissance à délivrer aux roues motrices et de manière correspondante forment au moins une grandeur de réglage à délivrer sur la première sortie (10) pour la commande d'au moins un organe de réglage pour la détermination de la puissance à délivrer au moteur électrique et/ou à capter sur la génératrice.

7. Unité d'entraînement selon la revendication 6 **caractérisé en ce que** le moteur électrique (3) est constitué par une machine à flux transversal.

8. Procédé selon la revendication 6 ou 7 **caractérisé en ce que** l'organe actionneur (11) est une pédale d'accélérateur et/ou une pédale de frein.

9. Procédé selon les revendications 6 à 8 **caractérisé en ce que** les moyens précités dans le dispositif d'affectation (14) sont des champs de caractéristiques.

10. Procédé selon les revendications 6 à 9 **caractérisé en ce que** les moyens sont des programmes de calcul à parcourir
